# EUROPÄISCHE PATENTSCHRIFT

(11) **EP 1 059 703 B1**
(45) Veröffentlichungstag und Bekanntmachung des Hinweises auf die Patenterteilung: **17.09.2003**
(21) Anmeldenummer: 00109125.5
(22) Anmeldetag: 05.05.2000
(51) Int. Cl.: H01R 13/66

(54) **Schutzstecker für eine Einrichtung der Telekommunikationstechnik**
Protector plug for a telecommunication technology device
Fiche de protection pour un dispositif de la technique de télécommunication

(30) Priorität: 02.06.1999 DE 29909701 U
(43) Veröffentlichungstag der Anmeldung: 13.12.2000
(73) Patentinhaber: QUANTE AG, 42109 Wuppertal (DE)
(72) Erfinder: Burmeister, Klaus-Dieter, 42111 Wuppertal (DE); Gaertner, Norbert, 42285 Wuppertal (DE); Hajok, Johann Georg, 44795 Bochum (DE)
(74) Vertreter: HOFFMANN - EITLE

(56) Entgegenhaltungen:
- EP-A- 0 405 337
- DE-C- 19 519 785
- DE-U- 9 101 599
- US-A- 4 307 430
- US-A- 5 157 580

## Beschreibung

### Technisches Gebiet

Die Erfindung betrifft einen Schutzstecker für eine Einrichtung der Telekommunikationstechnik.

Zum Schutz von elektronischen Bauteilen und Geräten, die mit zumeist leisten- oder blockförmig ausgebildeten Anschlusseinrichtungen der Telekommunikationstechnik verbunden sind, gegen zu hohe elektrische Ströme und/oder Überspannung werden gewöhnlich Schutzstecker verwendet, die an einer offenen Seite des Gehäuses der Anschlusseinrichtung auf- oder einsteckbar sind und die zum Schutz erforderlichen Bauteile aufweisen. Hierbei sind die Schutzstecker üblicherweise für den Schutz jeweils einer Doppelader ausgelegt. Dies bedeutet, dass sie paarweise die nebeneinanderliegenden Kontakte der ankommenden und der abgehenden Seite abgreifen und mit den Schutzbauteilen elektrisch verbinden.

### Stand der Technik

Bei dem Schutzstecker gemäß der DE 39 09 783 C1 sind die Abgreifkontakte an einer Leiterplatte ausgebildet, die im angebrachten Zustand zwischen den Kontaktlaschen der als Trennkontakte ausgebildeten Kontakte der zugehörigen Anschlussleiste eingeführt ist. Die Leiterbahn greift die Kontakte der ankommenden und der abgehenden Seite ab und leitet den Strom über bedrahtete Schutzbauteile, die an die Leiterplatte gelötet sind. Schon die Verwendung einer Leiterplatte zum Abgreifen der Kontakte der Anschlusseinrichtung ist nachteilig, da eine Leiterplatte ein besonderes Fertigungsverfahren erfordert, was zu Nachteilen im Hinblick auf die Kosten führt. Darüber hinaus bedeutet es einen besonderen Herstellungsaufwand, die einzelnen bedrahteten Bauteile auf die Leiterplatte zu löten. Schließlich erstrecken sich diese weitgehend senkrecht zu der Leiterplatte. Sie sind oben auf der Leiterplatte angeordnet und führen dazu, dass dieser bekannte Schutzstecker ein vergleichsweise großes Gehäuse benötigt. Dies bedeutet in dem Bereich der Anschlussleiste oberhalb der Kontakte einen erheblichen Platzbedarf.

Bei dem aus der EP 0 471 167 A1 bekannten Schutzstecker wird ein dreipoliger Überspannungsableiter, der nicht bedrahtet ist, über ein dazwischen angeordnetes Blechteil mit einer Leiterplatte verbunden. Hierdurch kann bei der Verwendung eines nicht bedrahteten Überspannungsableiters der Platzbedarf verringert werden. Dieser bekannte Schutzstecker ist jedoch hinsichtlich des Herstellungsaufwandes aufgrund der Notwendigkeit einer Leiterplatte immer noch nachteilig.

Aus der DE 38 13 889 C1 ist ein Schutzstecker mit nicht bedrahteten Schutzbauteilen bekannt, bei dem die Elektroden der Schutzbauteile mit Kontakten in Verbindung stehen, welche die Kontakte der Anschlussleiste abgreifen. Die Schutzbauteile werden in diesem Fall durch federnde, aufeinander zu gerichtete Haken klemmend im Gehäuse gehalten.

Aus der DE 91 01 599 U1 ist ein Schutzstecker bekannt, bei dem mehrfach gebogene und mit Ausklinkungen versehene Abgreifkontakte nahe beieinander verlaufen und verschiedene Schutzbauteile kontaktieren. Insbesondere hinsichtlich der Montagefreundlichkeit und der Übersichtlichkeit im zusammengebauten Zustand ist auch dieser bekannte Schutzstecker verbesserungswürdig.

Die DE 34 12 452 A1 beschreibt einen Schutzstecker für Verteilerleisten, in den von der offenen Oberseite her unbedrahtete Schutzbauteile entnehmbar eingesetzt sind. Eine zusätzliche Möglichkeit, bedrahtete Schutzbauteile anzubringen, besteht bei diesem bekannten Schutzstecker nicht.

Die EP 0 405 337 A2 beschreibt einen entsprechenden Schutzstecker für eine Verteilerleiste, der für das Einstecken von bedrahteten Schutzbauteilen angepasst ist. Auch in diesem Fall sind die einzelnen Kammern zur Oberseite hin offen, und bedrahtete Überspannungsableiter sind in dieser Richtung eingesetzt und unmittelbar elektrisch leitend mit den Abgreifkontakten kontaktiert. Die Überspannungsableiter befinden sich jedoch in einer Ebene oberhalb der Abgreifkontakte, so dass für diesen bekannten Schutzstecker ein erheblicher Bauraum erforderlich ist. Ferner besteht in diesem Fall keine Möglichkeit, zusätzlich unbedrahtete Schutzbauteile einzusetzen.

Aus der DE 40 05 942 A1 ist ein Überspannungsschutzstecker für Trennleisten bekannt, bei dem die Überspannungsschutzbauteile auf einer Trägerplatte angebracht sind, die mit Auswölbungen versehen ist. Die vorhandene Leiterplatte führt zu einem vergleichsweise hohen Kostenaufwand.

Dieser Nachteil gilt in gleicher Weise für den Gegenstand der DE 198 11 455 C1, bei dem ebenfalls eine Leiterplatte mit Schutzelementen bestückt ist.

US 4,307,430 offenbart einen Überspannungsschutzstecker für eine Einrichtung der Telekommunikationstechnik, mit einem Gehäuse, mehreren Abgreifkontakten, die im angebrachten Zustand die Kontakte der Einrichtung der Telekommunikationstechnik abgreifen und zumindest abschnittsweise als streifenförmige Blechelemente ausgebildet sind. Ferner hat der Schutzstecker zumindest einen Erdkontakt, der im angebrachten Zustand mit der Erde verbunden ist, sowie sowohl ein bedrahtetes als auch ein unbedrahtetes Bauteil, wobei die Bauteile oberhalb einer von den beiden Abgreifkontakten definierten Ebene angeordnet sind. Ferner wird eine Überspannung von den Abgreifkontakten über einen Vorsprung, einen Streifen, einen Stab und das unbedrahtete Bauteil geerdet. Durch einen derartigen Aufbau sind die Abmessungen des Schutzsteckers und der Platzbedarf für dessen Anbringung entsprechend groß.

### Darstellung der Erfindung

Der Erfindung liegt die Aufgabe zugrunde, einen Schutzstecker für eine Einrichtung der Telekommunikationstechnik zu schaffen, der übersichtlich, einfach aufgebaut und mit geringem Aufwand herstellbar ist sowie zumindest ein unbedrahtetes Schutzbauteil aufweist, und durch den gleichzeitig ein zuverlässiger Schutz für diejenigen Bauteile und Geräte erreicht werden kann, die der mit dem Schutzstecker versehenen Anschlusseinrichtung nachgeschaltet sind.

Die Lösung dieser Aufgabe erfolgt durch die Merkmale des Anspruchs 1.

Demzufolge weist der erfindungsgemäße Schutzstecker ein Gehäuse und mehrere Abgreifkontakte auf, welche die Kontakte der Einrichtung der Telekommunikationstechnik abgreifen und zumindest abschnittsweise als streifenförmige Blechelemente ausgebildet sind. Diese Gestalt der Abgreifkontakte ist zum einen einfach. Zum anderen sorgt sie infolge der erfindungsgemäßen, zumindest abschnittsweisen Parallelanordnung der Abgreifkontakte für zwei Ebenen, die in dem erfindungsgemäßen Schutzstecker definiert werden. Erfindungsgemäß sind die Schutzbauteile, unter denen sich zumindest ein unbedrahtetes Schutzbauteil und ein bedrahtetes Bauteil befindet, zwischen den durch die Abgreifkontakte definierten Ebenen angeordnet und mit den Abgreifkontakten sowie einem Erdkontakt kontaktiert.

Mit anderen Worten sind die Abgreifkontakte zumindest abschnittsweise so geformt, dass sie sich gegenüber liegen und in dem Zwischenraum denjenigen Raum definieren, in dem sämtliche Schutzbauteile angeordnet sind. Hierdurch kann ein besonders übersichtlicher und einfacher Aufbau des Schutzsteckers und eine einfache Montage realisiert werden, da der Raum mit den Schutzbauteilen durch die Abgreifkontakte definiert und begrenzt wird. Diese Anordnung ist darüber hinaus äußerst platzsparend. Insbesondere können verglichen mit der üblicherweise verwendeten Anbringung "auf" einer Leiterplatte die Abmessung des Schutzsteckers und der Platzbedarf für dessen Anbringung verringert werden.

Ferner ist durch die unmittelbare Kontaktierung der Schutzbauteile mit Abschnitten der Abgreifkontakte und des Erdkontakts eine kostspielige und unter Handhabungsgesichtspunkten nachteilige Leiterplatte entbehrlich. Die Verwendung von streifenförmigen Blechelementen als Abgreifkontakte hat gegenüber den herkömmlicherweise benutzten Leiterplatten den wesentlichen Vorteil, dass die stromführenden Kontakte massiv ausgebildet werden können. Eine massive Gestaltung dieser Leiter, also die Einrichtung eines gewissen Leitungsquerschnitts, ist für die Führung der auftretenden Ströme erforderlich. Auf den bislang verwendeten Leiterplatten können die Kontaktbahnen aus technischen Gründen nur vergleichsweise dünn ausgeführt werden, so dass der stromführende Querschnitt hierdurch stark begrenzt ist. Durch die Verwendung von streifenförmigen Blechelementen, mit denen die Drähte der bedrahteten Bauteile unmittelbar elektrisch leitend verbunden sind, ergibt sich eine vorteilhafte massive Ausführung dieser Leiter.

Im übrigen ist der erfindungsgemäße Schutzstecker nicht auf eine Ausführungsform beschränkt, die dem Schutz von elektronischen Bauteilen und Geräten dient, die mittels einer einzigen, bestimmten Doppelader an eine Anschlusseinrichtung angeschlossen sind. Vielmehr kann mit dem vorangehend beschriebenen Aufbau auch ein sogenannter mehradriger Schutzstecker ausgeführt werden, der mit denjenigen Bauteilen bestückt ist, die für den Schutz von elektronischen Geräten oder Bauteilen erforderlich sind, die über mehrere, verschiedene Doppeladern mit der mit dem Schutzstecker zu versehenden Anschlusseinrichtung verbunden sind. In diesem Fall könnte der Schutzstecker aufgrund der Aufnahme der Schutzbauteile für mehrere Doppeladern auch als Magazin bezeichnet werden. Es wird jedoch bevorzugt, dass der erfindungsgemäße Schutzstecker zwei Abgreifkontakte bzw. zwei Paare von Abgreifkontakten aufweist, so dass er für den Schutz einer einzigen Doppelader ausgelegt ist.

Vorteilhafte Weiterbildungen des erfindungsgemäßen Schutzsteckers sind in den weiteren Ansprüchen beschrieben.

Für die Abgreifkontakte und/oder den Erdkontakt hat sich eine Gestaltung als besonders vorteilhaft erwiesen, bei der diese Kontaktlaschen aufweisen, die sich von den streifenförmigen Bereichen erstrecken und einen Kontakt mit dem Schutzbauteil ausbilden. Hierdurch können in besonders vorteilhafter Weise die Funktionen des erfindungsgemäßen Schutzsteckers realisiert werden.

Hierbei bietet es besondere Vorteile im Hinblick auf ein besseres Anliegen an den Oberflächen der Schutzbauteile sowie eine besonders zuverlässige Kontaktierung, wenn die Kontaktlaschen bezüglich der Oberflächen der Schutzbauteile derart ein wenig schräg gestellt sind, dass eine Linienberührung mit der Oberfläche des Schutzbauteils erreicht wird. Hierdurch kerbt sich unter Umständen die Kante der Kontaktlasche sogar ein wenig in die Oberfläche des Schutzbauteils ein, so dass ein besonders zuverlässiger elektrischer Kontakt erreicht wird.

Für den erfindungsgemäßen Schutzstecker wird derzeit ferner eine Ausführungsform bevorzugt, bei der in dessen Inneren ein Kontaktträger vorgesehen ist, der Kammern aufweist, in denen insbesondere die unbedrahteten Schutzbauteile aufgenommen sind. Die beschriebenen Kammern sorgen für einen besonders leicht vorzunehmenden Zusammenbau des Schutzsteckers.

In besonders vorteilhafter Weise können die beschriebenen Kammern bei Verwendung von Abgreifkontakten und/oder einem Erdkontakt, die daran ausgebildete Kontaktlaschen aufweisen, kombiniert werden, indem die Wände der beschriebenen Kammern Aussparungen aufweisen, in denen die Kontaktlaschen aufgenommen und geführt sind. Hierdurch lässt sich eine besonders exakte Lagedefinition der Abgreifkontakte und/oder des Erdkontaktes sowie eine leichte Montierbarkeit erreichen.

Für die Kontaktierung des bedrahteten Schutzbauteils wird bevorzugt, dass zumindest ein Teil der Abgreifkontakte und/oder der Erdkontakt jeweils zumindest einen Klemmschlitz aufweist, in den der jeweilige Draht des bedrahteten Schutzbauteils in einer derartigen Ausrichtung eingeklemmt ist, dass sich der Draht in Richtung des Klemmschlitzes erstreckt. Mit anderen Worten verlaufen die beiden Schenkel, die zwischen sich den Klemmschlitz definieren, parallel zu dem in den Klemmschlitz eingeführten Draht des Schutzbauteils.

In diesem Fall bietet es bei Verwendung des vorangehend beschriebenen Kontaktträgers erhebliche Handhabungsvorteile, wenn dieser Führungen für die Drähte des bedrahteten Schutzbauteils aufweist, so dass mittels der Führungen die Lage der Drähte bezüglich der Klemmschlitze derart exakt definiert werden kann, dass eine zuverlässige elektrisch leitende Verbindung sichergestellt ist.

Bei der Verwendung des erfindungsgemäßen Schutzsteckers erweist es sich ferner als vorteilhaft, wenn in dem Gehäuse Aussparungen vorgesehen sind, durch welche Prüfabgriffe der Abgreifkontakte von außen zugänglich sind. Hierdurch können die erforderlichen Prüfungen problemlos durchgeführt werden.

Für die Ausrüstung mit den Schutzbauteilen wird für den erfindungsgemäßen Schutzstecker bevorzugt, dass dieser einen Stromschutz, vorzugsweise in Form eines temperaturabhängigen Widerstandes, und/oder einen Überspannungsschutz in Form eines Gasableiters und/oder einen Überspannungs-Feinschutz, vorzugsweise in Form einer Feinschutzdiode oder eines Solid-State-Ableiters, aufweist. Ein derartiger elektronischer Ableiter weist in vorteilhafter Weise eine enge Ansprechtoleranz auf. Durch die beschriebenen Bauteile bzw. deren Kombination miteinander kann in vorteilhafter Weise ein Schutz sowohl gegen zu hohe Ströme als auch gegen Überspannungen erreicht werden.

Für die Festlegung der Abgreifkontakte in dem Gehäuse des Schutzsteckers bietet es Vorteile, wenn die Kontakte einen durch eine zweifache Biegung ausgebildeten Absatz aufweisen, mit dem sie in dem Gehäuse oder einer Gehäusehälfte abgestützt sind.

### Kurze Beschreibung der Zeichnungen

Nachfolgend wird eine beispielhaft in den Zeichnungen dargestellte Ausführungsform der Erfindung näher erläutert. Es zeigen:
- Fig. 1: eine perspektivische Explosionsansicht des erfindungsgemäßen Steckers;
- Fig. 2: eine perspektivische Rückansicht des teilweise zusammengesetzten Schutzsteckers gemäß Figur 1;
- Fig. 3: eine perspektivische Vorderansicht des erfindungsgemäßen Schutzsteckers in einem weiteren Montagezustand; und
- Fig. 4: eine perspektivische Vorderansicht des erfindungsgemäßen Schutzsteckers in einem weiteren Montagezustand.

### Ausführliche Beschreibung bevorzugter Ausführungsformen der Erfindung

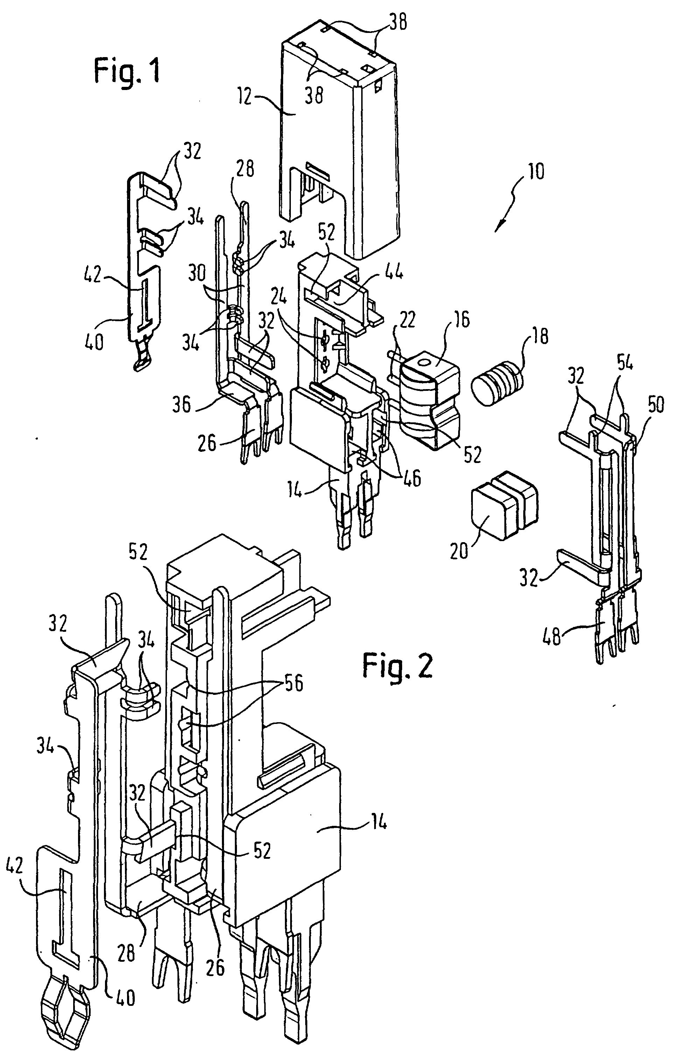

Wie Figur 1 zeigt, weist der insgesamt mit 10 bezeichnete Schutzstecker ein Gehäuse 12 auf, das im endgültig zusammengebauten Zustand die Schutzbauteile und Kontakte abdeckt, die an einem Kontaktträger 14 angeordnet werden. Im einzelnen sind bei dem gezeigten Ausführungsbeispiel als Schutzbauteile ein Überspannungsschutz in Form eines Gasableiters 16, zwei Überspannungs-Feinschutzeinrichtungen in Form von Feinschutzdioden 18 und zwei Stromschutzeinrichtungen in Form von temperaturabhängigen Widerständen 20 vorgesehen. Bei dem gezeigten Ausführungsbeispiel sind die Feinschutzdioden 18 und die temperaturabhängigen Widerstände 20 unbedrahtet, während der Gasableiter 16 bedrahtet ist und drei Drähte 22 aufweist.

Im Rahmen des Zusammenbaus des erfindungsgemäßen Schutzsteckers 10 werden die Drähte 22 in jeweilige Drahtführungen 24 eingeführt, die in dem aus Kunststoff gefertigten Kontaktträger 14 vorgesehen sind. Von der Rückseite des Kontaktträgers 14 her sind im Endzustand zwei erste Abgreifkontakte 26 und 28 angeordnet. Mit ihren gemäß der Darstellung von Figur 1 untersten Abschnitten greifen diese die Kontakte der Einrichtung der Telekommunikationstechnik ab, auf die der Schutzstecker 10 bei der Verwendung aufgesteckt ist.

Bei dem gezeigten Ausführungsbeispiel weisen die beiden Abgreifkontakte 26, 28 zum einen einen weitgehend streifenförmigen Bereich 30 auf, von dem sich jeweils in das Innere des Kontaktträgers 14 Kontaktlaschen 32 sowie Paare von Kontaktschenkeln 34 erstrecken, die zwischen sich einen Kontaktschlitz begrenzen. In zusammengebautem Zustand, was nachfolgend noch genauer erläutert wird, stehen die Kontaktlaschen 32 mit den Oberflächen der temperaturabhängigen Widerstände 20 in Verbindung.

Ferner ist in den jeweiligen Kontaktschlitz zwischen den beiden Kontaktschenkeln 34 jeweils ein Draht 22 des Gasableiters 16 derart eingeführt, dass sich der Draht 22 in Richtung des Kontaktschlitzes und parallel zu den vorderen Abschnitten der Kontaktschenkel 34 erstreckt. Um die Lage zwischen dem Draht 22 und den Kontaktschenkeln 34 genau zu definieren, schließt sich in dem Kontaktträger 14 an die jeweilige Drahtführung 24 zu beiden Seiten nach oben und unten eine schlitzförmige Aussparung an, in welche jeweils ein Kontaktschenkel 34 eingeführt ist. In Bezug auf die Abgreifkontakte 26 und 28 sei noch erwähnt, dass diese in ihren unteren Bereich jeweils durch eine zweifache Biegung einen Absatz 36 aufweisen. Schließlich erstrecken sich die beiden Kontakte 26 und 28 derart weit in Richtung der Oberseite des Gehäuses 12, dass durch geeignete Aussparungen 38 in dem Gehäuse 12 die obersten Spitzen der Kontakte 26, 28 zugänglich sind, wodurch Prüfpunkte realisiert sind.

Im endgültigen Montagezustand ist (gemäß Fig. 1) hinter den beiden Abgreifkontakten 26, 28 der Erdkontakt 40 angeordnet, der an seinem unteren Abschnitt einen Bereich aufweist, mit dem er in dem Zustand, dass der Schutzstecker an einer Einrichtung der Telekommunikationstechnik angebracht ist, mit Erde verbunden ist. Die in Form eines umgekehrten T gestaltete Ausnehmung 42 dient der Lagedefinition an dem Kontaktträger 14, der an der Rückseite einen entsprechenden umgekehrt T-förmigen Vorsprung aufweist. In seinem oberen Bereich weist der Erdkontakt 40 zum einen ein Paar von Kontaktschenkeln 34 auf, die zwischen sich einen Kontaktschlitz definieren, in den im Endzustand der mittlere Draht 22 des Gasableiters 16 eingeführt ist. Ferner sind im obersten Abschnitt des Erdkontakts 40 zwei Kontaktlaschen 32 vorhanden, die jeweils der Kontaktierung einer der Feinschutzdioden 18 dienen.

Zu diesem Zweck sind im zusammengebauten Zustand die beiden Feinschutzdioden 18 in jeweilige Kammern 44 des Kontaktträgers 14 eingeführt. Ebenso befinden sich im unteren Bereich des Kontaktträgers 14 jeweilige Kammern 46 für die temperaturabhängigen Widerstände 20. Das Einsetzen der Feinschutzdioden 18 in die Kammern 44 bzw. der temperaturabhängigen Widerstände 20 in die Kammern 46 erfolgt durch jeweilige großflächige Durchbrüche, die zu der (gemäß Figur 1) Vorderseite des Schutzsteckers 10 ausgebildet sind. Um im eingesetzten Zustand sowohl eine zuverlässige Kontaktierung der Oberflächen der zuletzt genannten, unbedrahteten Schutzbauteile 18, 20 als auch eine gute Führung der beiden weiteren Abgreifkontakte 48 und 50 zu gewährleisten, weisen die Kammern 44 und 46 Ausnehmungen 52 auf, in welche die Kontaktlaschen 32 der Abgreifkontakte 48, 50 aufgenommen und geführt sind. Im Fall der beiden oberen Kammern 44 sind die Ausnehmungen 52 als seitliche Öffnungen ausgebildet, während sich in den beiden unteren Kammern 46 streifenförmige Vertiefungen in den beiden äußeren Seitenwänden finden. Im übrigen sind die Kammern 44 und 46 auch zu der (gemäß Figur 1) Rückseite mit Durchbrüchen geöffnet, was nachfolgend unter Bezugnahme auf die Figur 2 erläutert wird. Diese Durchbrüche zur Rückseite hin dienen im Fall der Feinschutzdioden 18 der Kontaktierung durch Abschnitte des Erdkontakts 40 und im Fall der temperaturabhängigen Widerstände 20 der Kontaktierung durch die beiden weiteren Abgreifkontakte 26 und 28.

Es sei erwähnt, dass bevorzugt sämtliche Kontaktlaschen 32 bezüglich der Oberflächen der Schutzbauteile 18 und 20 derart leicht schräg gestellt sind, dass eine Linienberührung mit den Oberflächen ausgebildet wird. Schließlich weisen auch die beiden Abgreifkontakte 48, 50 Abschnitte 54 auf, die sich zu Aussparungen 38 in dem Gehäuse 12 erstrecken, so dass hierdurch von außen zugängliche Prüfpunkte definiert werden. Wie schon aus der Explosionsdarstellung von Figur 1 erkennbar ist, befinden sich im Endzustand sämtliche Schutzbauteile 16, 18, 20 zwischen den Abgreifkontakten 26, 28, 48 und 50. Hierdurch wird ein besonders übersichtlicher und kompakter Aufbau des erfindungsgemäßen Schutzsteckers 10 erreicht.

Aus Figur 2 wird ein erster Montagezustand deutlich. In den Kontaktträger 14 ist der eine Abgreifkontakt 26 bereits von der Rückseite her eingeführt worden. Der zweite Abgreifkontakt 28 ist in einem teilweise eingeführten Zustand gezeigt, woraus deutlich wird, dass die Führung der Kontaktlaschen 32 jeweils durch eine geeignete, an dem Kontaktträger 14 vorgesehene Ausnehmung 52 erfolgt. Dies gilt ebenso für die im oberen Bereich vorgesehenen Kontaktlaschen 32 des Erdkontakts 40, für die in dem Kontaktträger 14 eine Ausnehmung 52 in Form einer streifenförmigen Nut oder Führungsvertiefung vorhanden ist.

Aus Figur 2 wird schließlich die Gestalt des Kontaktträgers 14 in dem Bereich deutlich, in dem sich im Endzustand die Drähte 22 eines bedrahteten Bauteils und die damit kontaktierten Kontaktschenkel 34 befinden. An eine kreisbogenförmige Ausnehmung 56 schließt sich nach oben und unten jeweils ein Bereich an, durch den die Lage der Kontaktschenkel 34 definiert wird, so dass im Endzustand eine sichere Einführung des Drahtes 22 zwischen die Kontaktschenkel 34 gewährleistet ist.

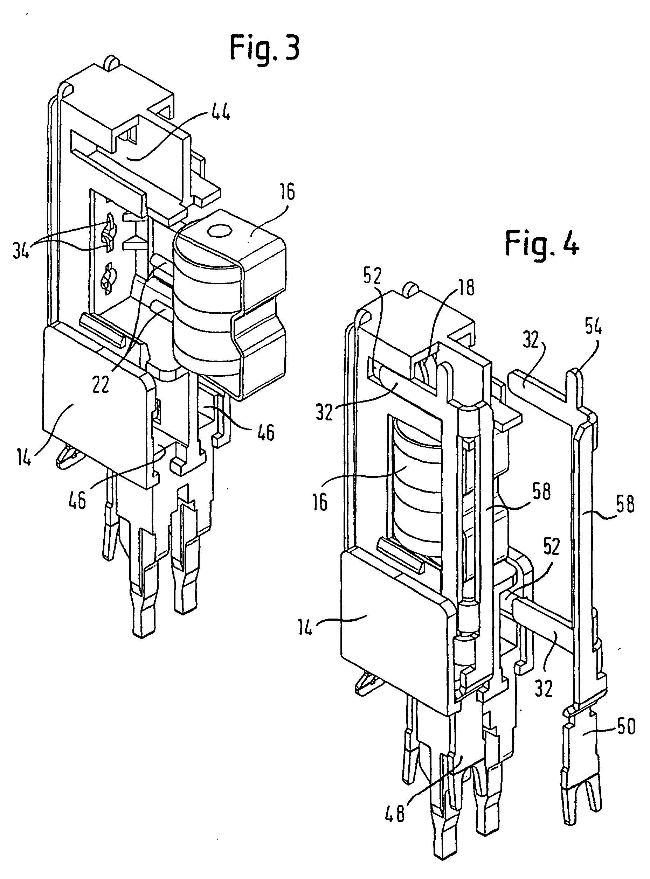

Aus der Figur 3, die einen weiteren Montagezustand zeigt, ist ersichtlich, wie sich durch zur Vorderseite hin offene schlitzförmige Ausnehmungen die Enden der Kontaktschenkel 34 erstrecken, zwischen die, geführt durch die entsprechende Gestaltung des Kontaktträgers 14, der jeweilige Draht 22 des bedrahteten Bauteils 16 eingeführt wird.

In Figur 4 ist gezeigt, wie nach der Anbringung des bedrahteten Bauteils 16 und der Anordnung jeweils eines der unbedrahteten Bauteile 18 und 20 (vgl. Figur 1), von denen in Figur 4 nur die linkere der beiden Feinschutzdioden 18 zu erkennen ist, die beiden Abgreifkontakte 48 und 50 an den Kontaktträger 14 angebracht werden. Die jeweiligen Kontaktlaschen 32 werden bei dem gezeigten Ausführungsbeispiel durch geeignete Ausnehmungen 52 derjenigen Kammern 44, 46 geführt, in denen sich die unbedrahteten Schutzbauteile 18, 20 befinden. Insgesamt definieren die beiden streifenförmigen Abschnitte 58 der Abgreifkontakte 48 und 50 eine erste Ebene. Eine zweite Ebene wird durch die streifenförmigen Abschnitte 30 (vgl. Fig. 1) der beiden Kontakte 26, 28 definiert, von denen in Figur 4 nur die oberen Enden zu erkennen sind. Anhand der Explosionsdarstellung von Figur 1 wird ergänzend deutlich, dass die genannten streifenförmigen Abschnitte jeweils an den Rändern des Schutzsteckers 10 angeordnet sind, so dass sich sämtliche Schutzbauteile 16, 18, 20 in übersichtlicher und einfach einzubringender Weise zwischen den Abgreifkontakten 26, 28, 48 und 50 befinden und auf einfache Weise sicher elektrisch leitend kontaktiert werden. Es sei noch ergänzt, dass der Stecker 10 gegenüber dem in Figur 4 gezeigten Montagezustand dadurch vervollständigt wird, dass auch der Abgreifkontakt 50 vollständig in die der gezeigten Lage des Abgreifkontakts 48 entsprechende Position gebracht wird, und dass nachfolgend von oben das Gehäuse 12 aufgesetzt wird, so dass der Schutzstecker 10 eine kompakte Form erhält, wobei durch die Ausnehmungen 38 des Gehäuses 12 Prüfabgriffe zugänglich bleiben. Im Übrigen sorgt das Gehäuse 12 für einen sicheren Verschluss des erfindungsgemäßen Schutzsteckers. Mit anderen Worten sind die Schutzbauteile nicht ohne weiteres zugänglich oder entnehmbar, es ist vielmehr beabsichtigt, dass diese dauerhaft in dem kompakt gestalteten Schutzstecker verbleiben.

## Patentansprüche

1. Schutzstecker (10) für eine Einrichtung der Telekommunikationstechnik, mit:
- einem Gehäuse (12),
- mehreren Abgreifkontakten (26, 28, 48, 50), die im angebrachten Zustand die Kontakte der Einrichtung der Telekommunikationstechnik abgreifen und zumindest abschnittsweise (30, 58) als streifenförmige Blechelemente ausgebildet sind, wobei die Abgreifkontakte (26, 28, 48, 50) zumindest abschnittsweise parallel zueinander angeordnet sind, wodurch zwei parallele Ebenen definiert werden,
- zumindest einem Erdkontakt (40), der im angebrachten Zustand mit Erde verbunden ist,
- zumindest einem unbedrahteten Schutzbauteil (18, 20), und
- zumindest einem bedrahteten Bauteil (16),
- wobei alle Schutzbauteile (16, 18, 20) zwischen den durch die Abgreifkontakte (26, 28, 48, 50) definierten Ebenen angeordnet und mit den Abgreifkontakten (26, 28, 48, 50) und gegebenenfalls dem Erdkontakt (40) unmittelbar kontaktiert sind.

2. Schutzstecker nach Anspruch 1, wobei
die Abgreifkontakte (26, 28, 48, 50) und /oder der Erdkontakt (40) Kontaktlaschen (32) aufweisen, mit denen die Schutzbauteile (18, 20) kontaktiert werden.

3. Schutzstecker nach Anspruch 2, wobei
die Kontaktlaschen (32) bezüglich der Oberfläche der Schutzbauteiles (18, 20) derart schräg gestellt sind, dass eine Linienberührung mit der Oberfläche des Bauteils (18, 20) erreicht wird.

4. Schutzstecker nach zumindest einem der vorangehenden Ansprüche, Wobei
ein Kontaktträger (14) vorgesehen ist, der Kammern (44, 46) aufweist, in denen die Schutzbauteile (18, 20) aufgenommen sind.

5. Schutzstecker nach Anspruch 4 und Anspruch 2 oder 3, wobei
Wände der Kammern (44, 46) Ausnehmungen (52) aufweisen, in denen die Kontaktlaschen (32) aufgenommen sind.

6. Schutzstecker nach zumindest einem der vorangehenden Ansprüche, wobei
zumindest einer der Abgreifkontakte (26, 28) und/oder der Erdkontakt (40) zumindest einen Klemmschlitz aufweisen, in den der Draht (22) des bedrahteten Bauteils (16) in einer derartigen Ausrichtung eingeklemmt ist, dass er sich in Richtung des Klemmschlitzes erstreckt.

7. Schutzstecker nach Anspruch 6 und Anspruch 4 oder 5,
der Kontaktträger (14) Drahtführungen (24) aufweist.

8. Schutzstecker nach zumindest einem der vorangehenden Ansprüche, wobei
das Gehäuse (12) Aussparungen (38) aufweist, durch welche Prüfabgriffe der Abgreifkontakte (26, 28, 48, 50) von außen zugängig sind.

9. Schutzstecker nach zumindest einem der vorangehenden Ansprüche, wobei
dieser einen Stromschutz und/oder einen Überspannungsschutz in Form eines Gasableiters (16) und/oder einen Überspannungs-Feinschutz aufweist.

10. Schutzstecker nach Anspruch 9, wobei
der Stromschutz in Form eines temperaturabhängigen Widerstandes (20) vorgesehen ist.

11. Schutzstecker nach Anspruch 9 oder 10, wobei
der Überspannungs-Feinschutz in Form einer Feinschutzdiode (18) oder eines Solid-State-Ableiters vorgesehen ist.

12. Schutzstecker nach zumindest einem der vorangehenden Ansprüche, wobei
an zumindest einem Abgreifkontakt (26, 28,) durch zweifache Biegung ein Absatz (36) ausgebildet ist, mit dem der Kontakt in dem Gehäuse (12) abgestützt ist.

## Claims

1. A protective plug (10) for telecommunications equipment, comprising:
- a housing (12),
- a plurality of tapping contacts (26, 28, 48, 50) which in the attached state tap the contacts of the telecommunications equipment and are formed at least in sections (30, 58) as strip-shaped sheet-metal elements, the tapping contacts (26, 28, 48, 50) being arranged parallel to each other at least in sections, thus defining two parallel planes,
- at least one earth contact (40) which in the attached state is connected to the earth,
- at least one non-wired protective component (18, 20), and
- at least one wired component (16),
- all the protective components (16, 18, 20) being arranged between the planes defined by the tapping contacts (26, 28, 48, 50) and being contacted directly with the tapping contacts (26, 28, 48, 50) and possibly the earth contact (40).

2. A protective plug according to Claim 1, wherein the tapping contacts (26, 28, 48, 50) andlor the earth contact (40) have contact tabs (32) with which the protective components (18, 20) are contacted.

3. A protective plug according to Claim 2, wherein the contact tabs (32) are inclined relative to the surface of the protective component (18, 20) such that linear contact with the surface of the components (18, 20) is achieved.

4. A protective plug according to at least one of the preceding claims, wherein a contact holder (14) is provided which has chambers (44, 46) in which the protective components (18, 20) are held.

5. A protective plug according to Claim 4 and Claim 2 or 3, wherein walls of the chambers (44, 46) have recesses (52) in which the contact tabs (32) are held.

6. A protective plug according to at least one of the preceding claims, wherein at least one of the tapping contacts (26, 28) and/or the earth contact (40) has/have at least one clamping slot in which the wire (22) of the wired component (16) is clamped in such an orientation that it extends in the direction of the clamping slot.

7. A protective plug according to Claim 6 and Claim 4 or 5, wherein the contact holder (14) has wire guides (24).

8. A protective plug according to at least one of the preceding claims, wherein the housing (12) has recesses (38) through which test taps of the tapping contacts (26, 28, 48, 50) are accessible from the outside.

9. A protective plug according to at least one of the preceding claims, wherein said plug has a current protection means and/or an overvoltage protection means in the form of a gas arrester (16) and/or a fine overvoltage protection means.

10. A protective plug according to Claim 9, wherein the current protection means is provided in the form of a temperature-dependent resistor (20).

11. A protective plug according to Claim 9 or 10, wherein the fine overvoltage protection means is provided in the form of a fine protection diode (18) or a solid-state arrester.

12. A protective plug according to at least one of the preceding claims, wherein a step (36) is formed on at least one tapping contact (26, 28) by double bending, with which step the contact is supported in the housing (12).

## Revendications

1. Fiche de protection (10) pour un dispositif de la technique des télécommunications, avec :
- un boîtier (12),
- plusieurs contacts de prise (26, 28, 48, 50) qui, à l'état monté, viennent en prise avec les contacts du dispositif de la technique des télécommunications et qui sont réalisés au moins par tronçons (30, 58) sous la forme d'éléments en tôle en forme de bande, les contacts de prise (26, 28, 48, 50) étant agencés parallèles entre eux au moins par tronçons de manière à définir deux plans parallèles,
- au moins un contact de terre (40) qui, à l'état monté, est relié à la terre,
- au moins un composant de protection (18, 20) sans sorties filaires, et
- au moins un composant avec sorties filaires (16),
dans laquelle tous les composants de protection (16, 18, 20) sont disposés entre les plans définis par les contacts de prise (26, 28, 48, 50) et sont en contact direct avec les contacts de prise (26, 28, 48, 50) et le cas échéant avec le contact de terre (40).

2. Fiche de protection selon la revendication 1, dans laquelle les contacts de prise (26, 28, 48, 50) et/ou le contact de terre (40) présentent des languettes de contact (32) qui viennent en contact avec les composants de protection (18, 20).

3. Fiche de protection selon la revendication 2, dans laquelle les languettes de contact (32) sont disposées obliquement par rapport à la surface des composants de protection (18, 20) de façon à réaliser un contact linéaire avec la surface du composant (18, 20).

4. Fiche de protection selon l'une au moins des revendications précédentes, dans laquelle il est prévu un support de contacts (14) qui présente des alvéoles (44, 46) dans lesquelles se logent les composants de protection (18, 20).

5. Fiche de protection selon la revendication 4 et selon la revendication 2 ou 3, dans laquelle les parois des alvéoles (44, 46) présentent des évidements (52) dans lesquels se logent les languettes de contact (32).

6. Fiche de protection selon l'une au moins des revendications précédentes, dans laquelle l'un au moins des contacts de prise (26, 28) et/ou le contact de terre (40) présentent au moins une fente de serrage dans laquelle le fil (22) du composant à sorties filaires (16) est pincé selon une orientation telle qu'il s'étend dans le sens de la fente de serrage.

7. Fiche de protection selon la revendication 6 et selon la revendication 4 ou 5, dans laquelle le support de contacts (14) présente des guides (24) pour les fils.

8. Fiche de protection selon l'une au moins des revendications précédentes, dans laquelle le boîtier (12) présente des évidements (38) par l'intermédiaire desquels des prises de test des contacts de prise (26, 28, 48, 50) sont accessibles de l'extérieur.

9. Fiche de protection selon l'une au moins des revendications précédentes, qui présente une protection contre les surintensités et/ou une protection contre les surtensions sous la forme d'un éclateur à gaz (16) et/ou une protection fine contre les surtensions.

10. Fiche de protection selon la revendication 9, dans laquelle la protection contre les surintensités est prévue sous la forme d'une résistance dépendante de la température (20).

11. Fiche de protection selon la revendication 9 ou la revendication 10, dans laquelle la protection fine contre les surtensions est prévue sous la forme d'une diode de protection fine (18) ou d'un parasurtenseur à semi-conducteur.

12. Fiche de protection selon l'une au moins des revendications précédentes, dans laquelle, sur l'un au moins des contacts de prise (26, 28), un épaulement (36) grâce auquel le contact est en appui dans le boîtier (12) est formé par un double pliage.
